Europäisches Patentamt

European Patent Office

Office européen des brevets

(11) Publication number: **0 308 286**
**A1**

## EUROPEAN PATENT APPLICATION

(21) Application number: **88402157.7**

(22) Date of filing: **25.08.88**

(51) Int. Cl.⁴: **C 08 F 8/50**
**C 08 L 23/10, C 08 K 5/14**

(30) Priority: **04.09.87 FR 8712310**

(43) Date of publication of application:
**22.03.89 Bulletin 89/12**

(84) Designated Contracting States:
**AT BE CH DE ES FR GB GR IT LI LU NL SE**

(71) Applicant: **EXXON CHEMICAL PATENTS INC.**
**200 Park Avenue**
**Florham Park New Jersey 07932 (US)**

(72) Inventor: **Goguelin, Michel**
**Le Guillermet**
**F-38850 Charavines (FR)**

(74) Representative: **Portal, Gérard et al**
**Cabinet Beau de Loménie 55, rue d'Amsterdam**
**F-75008 Paris (FR)**

(54) **Reinforced thermoplastic sheet of high moldability.**

(57) This semifinished product is a non-densified flexible sheet containing, as an intimate mixture, reinforcing fibers dispersed in the unit state, particles of polyolefinic resin and at least one organic peroxide whose decomposition, during hot conversion of the sheet, gives the mixture a high moldability. The articles obtained by compression exhibit a homogeneous distribution of the reinforcing fibers.

1/1

EP 0 308 286 A1

Bundesdruckerei Berlin

## Description

### REINFORCED THERMOPLASTIC SHEET OF HIGH MOLDABILITY

The present invention relates to a semifinished product in sheet form, based essentially on thermoplastic resin and reinforcing fibers and intended for hot conversion to finished articles.

It is known that, in a thermoplastic article, the reinforcing fibers only provide optimum reinforcement if they are completely wetted by the resin and uniformly distributed throughout the molding.

It is also known that, in the techniques for the conversion of thermoplastics by hot compression, the fluidity of the mixture of molten resin and reinforcement is a very important parameter because the higher the moldability of the said mixture :
- the more complex the shape of the molding can be ;
- and/or the thinner the molding can be ;
- and/or the lower the conversion temperature can be, i.e. the nearer it can be to the melting point of the resin ;
- and/or the lower the applied pressure can be ;
- and/or the simpler the arrangement of the said hot mixture in the mold can be ;
- and/or the better the surface appearance of the molding obtained ;
- and/or the easier adhesion of the resin to a supporting material during compression.

Now, semifinished products in the form of rigid sheets or in the form of plates obtained by extrusion lamination are already known in which the reinforcing fibers, generally glass strands are distributed throughout a thermoplastic matrix, generally a polyolefin. In such materials, for the best possible impregnation of the unit fibers within the strands, it is desirable for the thermoplastic resin to have a high fluidity when hot and, if this resin is a polyolefin, it is degraded before or during extrusion lamination so that its melt flow index is very high. These materials therefore have a high moldability with all the above-mentioned advantages associated with this property. However, as the hot material flows into the mold, separation takes place between the reinforcing fibers and the resin, part of which is squeezed out of the network of the said fibers; consequently, the fibers are not homogeneously distributed in the final article, which has zones of tension and brittleness.

In addition to these semifinished products in the form of plates or rigid sheets, flexible sheets are also known which consist of a non-densified intimate mixutre of reinforcing fibers dispersed in the unit state, for example glass fibers, and polymer particles, for example a polyolefin powder. Now, polyolefin powders, as can be obtained industrially when synthesis is complete, do not have a high melt flow index : for polypropylene homopolymer, for example, it is less than 50 and more generally less than 15-20 g/10 min (standards ISO 1133 or ASTM D 1238 - under 2.16 kg at 230°C). During hot conversion of these flexible sheets, as all the fibers are dispersed and the resin has a low fluidity, the mixture is viscous and the moldability can be critical with certain molding equipment and/or for certain molding configurations or applications. On the other hand, the glass fibers are homogeneously distributed throughout the molded article, irrespective of its complexity and the distance travelled by the material from the loading point.

It is therefore desirable to reconcile a high moldability with a homogeneous distribution of the reinforcement in the finished article.

Further this should be achieved while allowing use of the long glass fibers ( $\geq$ 6mm) not broken by the molding method in constrast to the prior art extrusion process breaking the fibers into 0.2-0.5mm length, hence resulting in a weaker product.

According to the present invention, there is provided a semifinished product in the form of a flexible sheet as defined above, which contains, in the active state (as hereinafter defined), at least one organic peroxide whose decomposition temperature is compatible with (as hereinafter defined) the melting point and conversion temperature of the semifinished product.

"Active state" is understood as meaning that the said organic peroxide(s) constitutes one of the separate components of the sheet, in addition especially to the resin particles of low melt flow index, and that, in the undecomposed form, it is present in the sheet as a potential initiator of the degradation of the resin. During hot conversion of the sheet, and while the resin particles melt, the peroxide(s) will decompose into radicals which will cause a decrease in the molecular weight of this resin by scission of the polymer chains, the said resin thereby acquiring a high melt flow index.

According to another aspect of the invention, the sheet is molded by a method which comprises heating the sheet to a temperature sufficient to melt the resin and decompose the peroxide, thereby degrading the resin and increasing its melt flow value, and coating and compressing the heated sheet in a mold of desired shape to form a molding of a continuous plastic matrix having discrete reinforcing fibers homogeneously dispersed therein.

By using the semifinished product of the invention, it is therefore possible to form in situ, during hot conversion (that is heating and molding), a fiber-resin mixture of high moldability with all the advantages (as described hereinbefore) that this property brings. Furthermore, contrary to what might have been feared from making the resin very fluid, it is found that the plates or articles of greater or lesser complexity which are molded in this way from this semifinished product exhibit a homogeneous distribution of the reinforcement.

The organic peroxide(s) is required to be compatible with the melting point and conversion temperature of the semi-finished product, which means that it should not decompose at temperatures substantially below those used to melt the resin component and convert the product to a moulded article. This temperature depends on the resin and selected operating temperature.

Organic peroxides which are particularly suitable for the invention are monofunctional or polyfunctional peroxides whose temperature at which the half-life is 1 minute (0.1. mol in benzene) is above 170°C. These are as follows, although this list does not imply a limitation :
- dicumyl peroxide
- tert-butyl cumyl peroxide
- 2,5-dimethyl-2,5-bis(tert-butylperoxy) hexane
- 1,3-bis (tert-butylperoxisopropyl) benzene
- ditert-butyl peroxide
- 2,5-dimethyl-2,5-bis (tert-butylperoxy) hexyne
- 3,3,6,6,9,9-hexamethyl-1,2,4,5-tetraoxacyclononane

The amount of peroxide to be used depends on the nature of the peroxide, the composition of the sheet and the desired level of moldability, and is advantageously between 0.05 and 1% of the total dry weight of the sheet.

The other essential constituents of the non-densified flexible sheets are :
(1) -the reinforcing fibers, preferably in a proportion of from 15 to 60%, more preferably from 20 to 40%, of the weight of the sheet. Examples of these are as follows, alone or as a mixture of any two or more, and dispersed in the unit state (that is, as single fibers rather than bundles : glass fibers, carbon fibers, high-melting organic fibers (aramides, polyester and the like), glass whool, rock wool and cellulosic fibers.

Preferably the glass fibers are homogeneously dispersed discrete fibers of length 6 to 25 mm ; they are preferably from 9 to 15, more preferably from 10 to 12 microns in diameter.
(2) - the thermoplastic resin in the form of particles (that is non-fused). Examples of these are as follows, alone or as a mixture of any two or more : fibers, fibrils or powders, especially of polyolefins and preferably of polypropylene homopolymer.

The sheet can also contain other-optional components such as polymeric binders, mineral fillers, glass microbeads or microspheres, ground glass fibers, ceramic fibers, conducting fibers, pigments or dyes, heat stabilizers and any adjuvants known by those skilled in the art for imparting the required properties to the final plastic article.

The sheet of the invention can be obtained by any of the known techniques, such as the dry method, but it is preferably a sheet obtained by a wet paper-making method.

In general the wet method comprises forming an aqueous slurry comprising polymer particles, reinforcing fibers such as glass fibers which provide reinforcement in the final products, and process aids. The peroxide is added to the slurry in an aqueous solution. The slurry is then laid down in a thin layer on a moving mesh through which the water drains, optionally under negative pressure, to leave a wet web of particles and fibers. The web is then carried through a drying means such as in infra red oven or a hot air jet. The dried, so called wet laid web, is then subjected to densification by hot pressing or moulding to form a (glass) fiber reinforced polymer product.

The Examples which follow illustrate the invention.

In the Examples, various materials made of polypropylene reinforced with glass fibers were subject to a laboratory test consisting in :
    1 - preheating 130g of each material to 210°C between hot platens,
    2 - transferring the hot material to an "ear mold", and
    3 - molding the article by rapid compression. the mold temperatures, compression cycle and pressure were the same for all the materials.

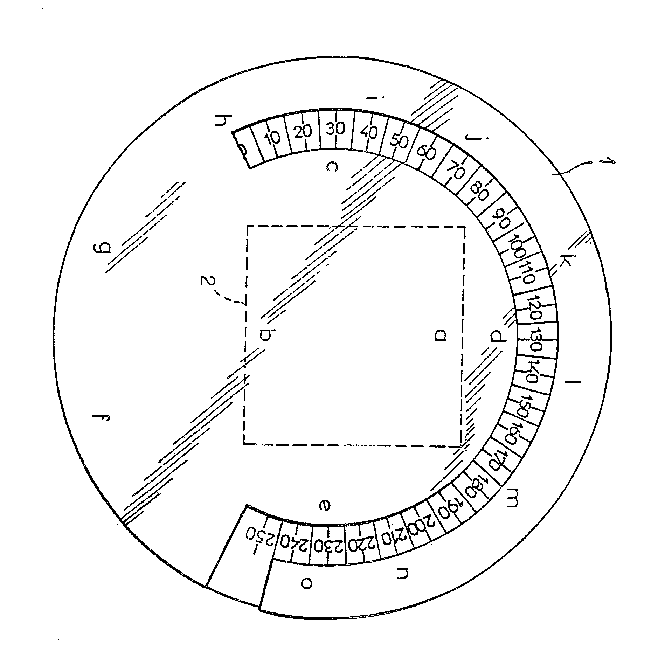

The complete molding is shown in a top view in the attached drawing : it has an appendix 1 in the shape of an arc of a circle, with a width of 16mm and a thickness of 3mm. The hot material is placed in the mold at the trapezium 2 : it flows under the action of the pressure and, according to its viscosity, it fills the appendix 1 :
- totally if its moldability is excessively high,
- partially to a greater or lesser extent according to whether its moldability is very high or low,
- or possibly not at all if the material is difficult to convert.
- The moldability of a given semifinished product can therefore be assessed by the length of the appendix, measured in degrees (scale from 0 to 245 degrees).

The Table below shows the moldabilities determined in this way for the various materials and the percentage distribution of the glass (calcination) at different points (a, b, c etc.) on the corresponding test-piece.

## MATERIAL 1

(comparison):
a rigid plate of polypropylene reinforced with 30% of glass in the form of a needled continuous mat of long glass fibers. Such plate is formed by extruding polypropylene films on glass fiber mats and hot pressing to form an impregnated, densified product.

## MATERIAL 2

(comparison):
a non-densified flexible sheet (dry web wet laid) of polypropylene particles without added peroxide (melt flow index : 15g/10 min - 2.16 kg, 230°C) reinforced with 30% of glass in the form of 6mm single fibers

## MATERIAL 3

(invention):
a non-densified flexible sheet of polypropylene particles (melt flow index: 15g/10 min - 2.16 kg, 230°C) reinforced with 30% of glass in the form of 6mm single fibers, containing 1,3-bis (tert-butylperoxyisopropyl) benzene in the active state, that is, in undecomposed form. (dry web wet laid)

TABLE

| Material | 1 rigid plate | 2 flexible sheet | 3 sheet according to the invention |
|---|---|---|---|
| moldability, degrees | 189 | 90 | 245 |
| % of glass at: | | | |
| a | 38.7 | 30.3 | 30.4 |
| b | 40.5 | 30.1 | 29.8 |
| c | 19.3 | 29.6 | 29.1 |
| d | 22.3 | 29.7 | 29.5 |
| e | 20.2 | 29.3 | 29.6 |
| f | 31.0 | 29.9 | 30.1 |
| g | 33.0 | 30.1 | 30.2 |
| h | 25.1 | 29.8 | 29.9 |
| i | 24.2 | 29.7 | 30.1 |
| j | 25.8 | 30.2 | 30.1 |
| k | 22.7 | - | 30.0 |
| l | 23.2 | - | 29.8 |
| m | 27.7 | - | 30.2 |
| n | - | - | 30.5 |
| o | - | - | 30.3 |
| difference between extreme values, % | 21.2 | 1.0 | 1.4 |

Material 3 according to the invention has the maximum moldability measurable by this laboratory test which means that the resin is in a form during the molding which permits rapid flow of the material, that is high melt flow value. Equivalent sheet 2 without peroxide has a lower melt flow value during molding, hence poorer moldability. It should be noted also that the distribution of the reinforcement fibers in the molding for material 3 is just as good as in the case of material 2, with a variation of about 1%. This should be contrasted with the 21% variation for material 1, which indicates that the homogenity of fiber distribution in material 3 is much better than for material 1. It is also noted that the farther the material travels round the alphabet mold, the better is the flow. Hence 3 is better than 2 in this regard.

**Claims**

1. A flexible sheet comprising a thermoplastic resin and reinforcing fibers and intended for conversion by heating and molding, characterised in that it contains at least one organic peroxide, in the active state, whose decomposition temperature is compatible with the melting point and conversion temperature of the sheet.

2. The sheet according to claim 1, wherein the resin is in the form of powder, fibers or fibrils.

3. The sheet according to claim 1 or claim 2, wherein the resin is a polyolefin.

4. The sheet according to claim 3, wherein the resin is a polypropylene homopolymer.

5. The sheet according to any one of claims 1 to 4, wherein the peroxide is selected from monofunctional or polyfunctional peroxides whose temperature at which the half-life is 1 minute is above 170°C.

6. The sheet according to any one of claims 1 to 5, wherein the peroxide is selected from :
- dicumyl peroxide
- tert-butyl cumyl peroxide
- 2,5-dimethyl-2,5-bis(tert-butylperoxy) hexane
- 1,3-bis (tert-butyperoxyisopropyl) benzene
- ditert-butyl peroxide
- 2,5-dimethyl-2,5-bis (tert-butylperoxy) hexyne
- 3,3,6,6,9,9-hexamethyl-1,2,4,5-textraoxacylononane

7. The sheet according to any one of claims 1 to 6, wherein the peroxide is present in the sheet in a proportion of from 0.05 to 1% of the total dry weight of the sheet.

8. The sheet according to any one of claims 1 to 7, wherein the reinforcing fibers are present in a proportion of 15 to 60%, preferably 20 to 40%, of the total dry weight of the sheet.

9. The sheet according to any one of claims 1 to 8 wherein the reinforcing fibers are glass fibers preferably from 6 to 25mm long and/or preferably from 9 to 15 microns in diameter.

10. The sheet according to any one of claims 1 to 9, which is a flexible sheet made by the wet paper-making process.

11. A method of forming a molding from a sheet according to any one of claims 1 to 10 which comprises heating the sheet to a temperature sufficient to melt the resin and decompose the peroxide, thereby degrading the resin and increasing its melt flow value, and coating and compressing the heated sheet in a mold of desired shape to form a molding of a continuous plastic matrix having discrete reinforcing fibers homogeneously dispersed therein.

**Claims for the following contracting state: ES**

1. A method of preparation of a flexible sheet comprising a thermoplastic resin and reinforcing fibers and intended for conversion by heating and molding, characterised in that it comprises incorporating in said sheet at least one organic peroxide, in the active state, whose decomposition temperature is compatible with the melting point and conversion temperature of the sheet.

2. The method according to claim 1, wherein the resin is in the form of powder, fibers or fibrils.

3. The method according to claim 1 or claim 2, wherein the resin is a polyolefin.

4. The method according to claim 3, wherein the resin is a polypropylene homopolymer.

5. The method according to any one of claims 1 to 4, wherein the peroxide is selected from monofunctional or polyfunctional peroxides whose temperature at which the half-life is 1 minute is above 170°.

6. The method according to any one of claims 1 to 5, wherein the peroxide is selected from :
- dicumyl peroxide
- tert-butyl cumyl peroxide
- 2,5-dimethyl-2,5-bis(tert-butylperoxy) hexane
- 1,3-bis (tert-butyperoxyisopropyl) benzene
- ditert-butyl peroxide
- 2,5-dimethyl-2,5-bis (tert-butylperoxy) hexyne
- 3,3,6,6,9,9-hexamethyl-1,2,4,5-textraoxacylononane

7. The method according to any one of claims 1 to 6, wherein the peroxide is present in the sheet in a proportion of from 0.05 to 1% of the total dry weight of the sheet.

8. The method according to any one of claims 1 to 7, wherein the reinforcing fibers are present in a proportion of 15 to 60%, preferably 20 to 40%, of the total dry weight of the sheet.

9. The method according to any one of claims 1 to 8 wherein the reinforcing fibers are glass fibers preferably from 6 to 25mm long and/or preferably from 9 to 15 microns in diameter.

10. The method according to any one of claims 1 to 9, which is a flexible sheet made by the wet paper-making process.

11. The method according to claim 10 wherein the peroxide under suspended form in an aqueous solution, is added to a slurry comprising polymer particles, reinforcing fibers and process aids.

12. A method of forming a molding from a sheet obtained by the method according to any one of claims 1 to 10 which comprises heating the sheet to a temperature sufficient to melt the resin and decompose the peroxide, thereby degrading the resin and increasing its melt flow value, and coating and compressing the heated sheet in a mold of desired shape to form a molding of a continuous plastic matrix having discrete reinforcing fibers homogeneously dispersed therein.

EP 0 308 286 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-4 489 034 (S. DAVISON) <br> * Column 2, lines 1-60 * <br> --- | 1 | C 08 F 8/50 <br> C 08 L 23/10 <br> C 08 K 5/14 |
| A | EP-A-0 211 479 (MITSUI TOATSU CHEMICALS) <br> * Page 12, line 18 - page 13, line 17 * <br> --- | 1 | |
| A | GB-A-2 100 268 (KIMBERLAY-CLARK) <br> * Page 2, lines 61-123 * <br> --- | 1 | |
| A | EP-A-0 208 353 (AKZO N.V.) <br> * Page 4, right-hand column, line 50 - page 5, left-hand column, line 21 * <br> ----- | 1 | |

TECHNICAL FIELDS
SEARCHED (Int. Cl.4)

C 08 F
C 08 L
C 08 K

The present search report has been drawn up for all claims

| Place of search | Date of completion of the search | Examiner |
|---|---|---|
| THE HAGUE | 27-12-1988 | GOOVAERTS R.E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P0401)